(19) Europäisches Patentamt
European Patent Office
Office européen des brevets

(11) Veröffentlichungsnummer: **0 166 888**
**B1**

(12) # EUROPÄISCHE PATENTSCHRIFT

(45) Veröffentlichungstag der Patentschrift: **29.06.88**

(51) Int. Cl.⁴: **C 08 F 10/00**, C 08 F 4/68

(21) Anmeldenummer: **85104859.5**

(22) Anmeldetag: **22.04.85**

(54) **Verfahren zum Herstellen von Homopolymerisaten des Ethens sowie Copolymerisaten des Ethens mit höheren alpha-Monoolefinen mittels eines Ziegler-Katalysatorsystems.**

(30) Priorität: **10.05.84 DE 3417238**

(43) Veröffentlichungstag der Anmeldung: **08.01.86 Patentblatt 86/2**

(45) Bekanntmachung des Hinweises auf die Patenterteilung: **29.06.88 Patentblatt 88/26**

(84) Benannte Vertragsstaaten: **AT BE DE FR GB IT NL**

(56) Entgegenhaltungen:
**EP-A-0 019 637**
**EP-A-0 064 637**

(73) Patentinhaber: **BASF Aktiengesellschaft, Carl-Bosch- Strasse 38, D-6700 Ludwigshafen (DE)**

(72) Erfinder: **Bachl, Robert, Dr., Parsevalstrasse 2, D-6520 Worms 1 (DE)**
Erfinder: **Warzelhan, Volker, Dr., Suedtiroler Ring 32, D-6719 Weisenheim (DE)**
Erfinder: **Schweier, Guenther, Dr., Friedrich-Pietzsch- Strasse 14, D-6701 Friedelsheim (DE)**
Erfinder: **Gropper, Hans, Dr., Sternstrasse 155, D-6700 Ludwigshafen (DE)**
Erfinder: **Ball, Wolfgang, Dr., 0 6,9, D-6800 Mannheim 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 166 888 B1

LIBER, STOCKHOLM 1988

**Beschreibung**

Die vorliegende Erfindung betrifft ein Verfahren zum diskontinuierlichen und - insbesondere - kontinuierlichen Herstellen von Homopolymerisaten des Ethens sowie - insbesondere - Copolymerisaten des Ethens mit untergeordneten Mengen an $C_3$- bis $C_8$-, insbesondere $C_4$- bis $C_6$-α-Monoolefinen durch Polymerisation des bzw. der Monomeren bei Temperaturen von 30 bis 200, insbesondere von 50 bis 125°C und Drücken von 0,1 bis 200, insbesondere von 5 bis 60 bar mittels eines Ziegler-Katalysatorsystems aus

(1) einer Übergangsmetall-Katalysatorkomponente und

(2) einer Organoaluminium-Katalysatorkomponente der Formel $AlR_mX_{3-m}$, worin stehen

X für einen Rest OR, Chlor, Brom bzw. Wasserstoff, vorzugsweise einen Rest OR bzw. Chlor,

R für einen $C_1$- bis $C_{18}$-Kohlenwasserstoffrest, insbesondere einen $C_1$-bis $C_{12}$-Alkylrest, und vorzugsweise einen $C_2$- bis $C_8$-Alkylrest

m für eine Zahl von 1 bis 3, vorzugsweise eine Zahl von 2 bis 3,

und

(3) einer Organohalogen-Katalysatorkomponente (= Cokatalysator),

mit den Maßgaben, daß das Atomverhältnis Übergangsmetall aus der Katalysatorkomponente (1) : Aluminium aus der Katalysatorkomponente (2) im Bereich von 1 : 0,1 bis 1 : 500, vorzugsweise 1 : 0,2 bis 1 : 50, und das Molverhältnis Organoaluminium-Katalysatorkomponente (2) : Organohalogen-Katalysator komponente (3) im Bereich von 1 : 0,001 bis 1 : 10, vorzugsweise 1 : 0,01 bis 1 : 0,8 liegt.

Polymerisationsverfahren dieser Art sind bekannt, wobei im gegebenen Zusammenhang z. B. als repräsentativ das in der US-PS-3 723 348 oder das in der GB-PS-1 309 565 beschriebene gelten kann.

Die genannte Verfahrensart hat - ebenso wie in Parallele zu setzende andere Verfahrensarten - zum Kernstück ein in besonderer Weise ausgestaltetes Ziegler-Katalysatorsystem.

Die besonderen Ausgestaltungen dieses Systems werden bekanntlich vorgenommen, um bestimmte Ziele zu erreichen, wie die folgenden:

(a) Katalysatorsysteme, die eine erhöhte Ausbeute an Polymerisat zu liefern vermögen, nämlich Katalysatorsysteme mit einer erhöhten Produktivität, d.h. Systeme, bei denen die Menge an gebildetem Polymerisat pro Gewichtseinheit der Katalysatorkomponente (1) erhöht ist.

(b) Katalysatorsysteme, mit denen es - über die Mengenrelationen ihrer Komponenten - möglich ist, die Molmassenverteilung der Polymerisate optimal zu beeinflussen; - was für das "Maßschneidern" der anwendungstechnischen Eigenschaften der Polymerisate von Bedeutung ist.

(c) Katalysatorsysteme, die ihre positiven Wirkungen auch bei relativ niederen Temperaturen entfalten; - was z. B. für Trockenphasenpolymerisationen von Bedeutung sein kann.

(d) Katalysatorsysteme, durch welche die morphologischen Eigenschaften der Polymerisate in bestimmter Weise beeinflußt werden, etwa im Sinne einer einheitlichen Korngröße, eines geringen Feinstaubanteils und/oder einer hohen Schüttdichte; - was für die technische Beherrschung der Polymerisationssysteme, die Aufarbeitung der Polymerisate und/oder die Verarbeitbarkeit der Polymerisate von Bedeutung sein kann.

(e) Katalysatorsysteme, die einfach und sicher herzustellen und gut handzuhaben sind; - z. B. solche, die sich in (inerten) Kohlenwasserstoff-Hilfsmedien zubereiten lassen.

(f) Katalysatorsysteme, die es ermöglichen, bei Polymerisationen unter Einwirkung von Molekulargewichtsreglern, wie Wasserstoff, mit relativ geringen Mengen an Regler auszukommen; - was z. B. für die Thermodynamik der Verfahrensführung von Bedeutung sein kann.

(g) Katalysatorsysteme, die es erlauben, Polymerisate mit besonders ausgeprägter Spannungsrißbeständigkeit zu erzeugen; - einer Eigenschaft, die z. B. besonders wichtig ist für Flüssigkeits-Behältnisse, namentlich Behältnisse, in denen aggressive Flüssigkeiten aufbewahrt werden sollen.

(h) Katalysatorsysteme, die auf spezielle Polymerisationsverfahren zugeschnitten sind; - etwa solche, die z. B. entweder auf die spezifischen Besonderheiten der Suspensionspolymerisation oder auf die spezifischen Besonderheiten der Trockenphasenpolymerisation abgestimmt sind.

(i) Katalysatorsysteme, mittels derer Polymerisate mit einerseite einer hohen

Molmasse (Fertigteilzähigkeit) sowie anderseits einer problemlosen Verarbeitbarkeit erhalten werden können; - d.h. hochmolekulare Polymerisate, die sich auch bei relativ niederen Verarbeitungstemperaturen und/oder durch relativ schwache Verarbeitungskräfte relativ schnell zu einwandfreien Formteilen verarbeiten lassen.

(j) Katalysatorsysteme, die zu Polymerisaten mit einer besonders hohen Steifigkeit führen; - einer Eigenschaft, die für viele Anwendungsgebiete erwünscht ist.

(k) Katalysatorsysteme, mit denen es möglich wird, bei der kontinuierlichen Polymerisation Polymerisate zu erhalten, deren Eigenschahten möglichst geringen zeitlichen Schwankungen unterliegen.

Nach den bisherigen Erfahrungen gibt es unter den mannigfachen Zielen etliche Ziele, die man durch besondere Ausgestaltungen des Katalysatorsystems nur dann erreichen kann, wenn man andere Zierle zurücksetzt.

Unter diesen Gegebenheiten ist man im allgemeinen bestrebt, solche Ausgestaltungen zu finden, mit denen man nicht nur die gestecken Ziele erreicht, sondern auch andere erwünschte Ziele möglichst wenig zurücksetzen muß.

In diesem Rahmen liegt auch die Aufgabenstellung, die zur vorliegenden Erfindung geführt hat: Eine neue Art Katalysatorsysteme aufzuzeigen, mit dem man gegenüber bekannten System - unter verleichbarer Zielsetzungbesser Ergebnisse erreichen kann, insbesondere, was die vorgenannten Ziele (b), (g), (i) und (j) betrifft, die möglichst gut erreicht werden sollen bei zugleich gutem Erreichen der Ziele (a) und (k).

Es wurde gefunden, daß die gestellte Aufgabe gelöst werden kann mit einem Katalysatorsystem, welches eine spezielle Übergangsmetall-Katalysatorkomponente (1) - die sowohl in bestimmter Weise hergestellt sein als auch die Übergangsmetalle Vanadium, Titan sowie, gegebenfalls und vorteilhafterweise Zirkon in bestimmter Form gemeinsam enthalten muß - aufweist.

Gegenstand der vorliegenden Erfindung ist dementsprechend ein Verfahren zum diskontinuierlichen und - insbesondere - kontinuierlichen Herstellen von Homopolymerisaten des Ethens sowie - insbesondere - Copolymerisaten des Ethens mit untergeordneten Mengen an $C_3$ bis $C_8$-, insbesondere $C_4$-bis $C_6$- -Monoolefinen, durch Polymerisation des bzw. der Monomeren bei Temperaturen von 30 bis 200, insbesondere von 50 bis 125°C und Drücken von 0,1 bis 200, insbesondere von 5 bis 60 bar mittels eines Ziegler-Katalysatorsystems aus

(1) einer Übergangsmetall-Katalysatorkomponente und

(2) einer Organoaluminium-Katalysatorkomponente der Formel $AlR_mX_{3-m}$, worin stehen

X für einen Rest OR, Chlor, Brom bzw. Wasserstoff, vorzugsweise einen Rest OR bzw. Chlor,

R für einen $C_1$- bis $C_{18}$-Kohlenwasserstoffrest, insbesondere einen $C_1$- bis $C_{12}$-Alkylrest und vorzugsweise einen $C_2$- bis $C_8$-Alkylrest, und

m für eine Zahl von 1 bis 3, vorzugsweise eine Zahl von 2 bis 3,

und

(3) einer Organohalogen-Katalysatorkomponente (= Cokatalysator),

mit den Maßgaben, daß das Atomverhältnis Übergangsmetall aus der Katalysatorkomponente (1): Aluminium aus der Katalysatorkomponente (2) im Bereich von 1 : 0,1 bis 1 : 500, vorzugsweise 1 : 0,2 bis 1 : 50 und das Molverhältnis OrganoaluminiumKatalysatorkomponente (2) : Organohalogen-Katalysatorkomponente (3) im Bereich von 1 : 0,001 bis 1 : 10, vorzugsweise 1 : 0,01 bis 1 : 0,8 liegt.

Das erfindungsgemäße Verfahren ist dadurch gekennzeichnet, daß eingesetzt wird

als Übergangsmetall-Katalysatorkomponente (1) das festphasige Produkt (VI), das erhalten worden ist, indem man

(1.1) zunächst

(1.1.1) einen feinteiligen, porösen, anorganisch-oxidischen Stoff (I), der einen Teilchendurchmesser von 1 bis 1.000, vorzugsweise 1 bis 400 µm, ein Porenvolumen von 0,3 bis 3, vorzugsweise 1 bis 2,5 $cm^3/g$ sowie eine Oberfläche von 100 bis 1.000, vorzugsweise 200 bis 400 $m^2/g$ besitzt und die Formel $SiO_2.aAl_2O_3$ - worin a steht für eine Zahl im Bereich von 0 bis 2, insbesondere 0 bis 0,5 - hat, und

(1.1.2) eine Lösung (II), wie sie sich ergibt beim Zusammenbringen von

(IIa) 100 Gewichtsteilen eines Oxakohlenwasserstoffs gesättigt aliphatischer oder teils gesättigt aliphatischer, teils aromatischer Natur, der 1 bis 2 Oxasauerstoffatome sowie mehr als 3 aber weniger als 19 Kohlenstoffatome aufweist, vorzugsweise eines Oxakohlenwasserstoffs gesättigt aliphatischer oder teils gesättigt aliphatischer, teils aromatischer Natur, der 1 Oxasauerstoffatom sowie mehr als 3 aber weniger als 11 Kohlenstoffatome

aufweist, insbesondere eines ringgeschlossenen Oxakohlenwasserstoffs gesättigt aliphatischer Natur, der 1 Oxasauerstoffatom sowie 4 bis 6 Kohlenstoffatome aufweist, und vor allem Tetrahydrofuran, und

(IIb) 0,01 bis 50, vorzugsweise 1 bis 30 Gewichtsteilen eines Gemischs aus

(IIb1) 100 Molteilen eines Vanadiumtrihalogenid-Alkohol-Komplexes der Formel $VY_3.nZ\text{-}OH$, worin stehen Y für Chlor oder Brom, vorzugsweise Chlor, n für eine Zahl von 1 bis 6, vorzugsweise 3 bis 4, und Z für einen einwertigen, nicht mehr als 10, vorzugsweise nicht mehr als 8 Kohlenstoffatome aufweisenden Kohlenwassrstoffrest gesättigt-aliphatischer oder teils gesättigt-aliphatischer, teils aromatischer Natur, insbesondere einen nicht mehr als 6 Kohlenstoffatome aufweisenden Alkylrest,

(IIb2) 0,2 bis 300, vorzugsweise 0,5 bis 100 Molteilen eines Titantrihalogenids, wobei das Halogen Chlor und/oder Brom sein kann, vorzugsweise eines Titantrichlorids, oder eines Titantrihalogenid-Alkohol-Komplexes der Formel $TiY_3.nZ\text{-}OH$, worin stehen Y für Chlor oder Brom, vorzugsweise Chlor, n für eine Zahl von 1 bis 6, vorzugsweise 3 bis 4, und Z für einen einwertigen, nicht mehr als 10, vorzugsweise nicht mehr als 8 Kohlenstoffatome aufweisenden Kohlenwasserstoffrest gesättigt-aliphatischer oder teils gesättigt-aliphatischer, teils aromatischer Natur, insbesondere einen nicht mehr als 4 Kohlenstoffatome aufweisenden Alkylrest, sowie

(IIb3)

- gegebenenfalls und vorteilhafterweise - 1 bis 400, vorzugsweise 3 bis 200 Molteilen eines Zirkontetrahalogenids, wobei das Halogen Chlor und/oder Brom sein kann, vorzugsweise eines Zirkontetrachlorids,

miteinander in Berührung bringt unter Bildung einer Suspension (III), mit der Maßgabe, daß das Gewichtsverhältnis anorganisch-oxidischer Stoff (I) : Übergangsmetall-Komposition (IIb) im Bereich von 1 : 0,01 bis 1 : 2, vorzugsweise von 1 : 0,2 bis 1 : 1,5 liegt, die Suspension (III) bei einer Temperatur, die unterhalb von 200, vorzugsweise unterhalb von 160°C und oberhalb des Schnelzpunkts des verwendeten Oxakohlenwasserstoffs (IIa) liegt, bis zur trockenen Konsistenz - Bildung eines festphasigen Zwischenprodukts (IV) eindampft, und

(1.2) dann

(1.2.1) das aus Stufe (1.1) erhaltene festphasige Zwischenprodukt (IV) und

(1.2.2) eine in einem organischen Lösungsmittel gelöste Aluminiumverbindung (V) der Formel $AlR_mX_{3-m}$, worin stehen

X für einen Rest OR, Chlor, Brom bzw. Wasserstoff, vorzugsweise einen Rest OR bzw. Chlor,

R für einen $C_1$ - bis $C_{18}$-Kohlenwasserstoffrest, insbesondere einen $C_1$- bis $C_{12}$-Alkylrest, und vorzugsweise einen $C_2$- bis $C_8$-Alkylrest, und

m für eine Zahl von 1 bis 3, vorzugsweise die Zahl 2,

miteinander in Berührung bringt unter Bildung einer Suspension, mit der Maßgabe, daß das Gewichtsverhältnis festphasiges Zwischenprodukt (IV): Aluminiumverbindung (V) im Bereich von 1 : 0,05 bis 1 : 2, vorzugsweise 1 : 0,1 bis 1 : 1 liegt, - wobei das dabei als Suspendiertes resultierende festphasige Produkt (VI) die Übergangsmetall-Katalysatorkomponente (1) ist -.

Zu dem erfindungsgemäßen Verfahren ist erläuternd das Folgende zu bemerken:

Das Polymerisationsverfahren als solches kann - unter Beachtung der kennzeichnenden Besonderheiten - in praktisch allen einschlägig üblichen technologischen Ausgestaltungen durchgeführt werden, etwa als Suspensions-Polymerisationsverfahren oder Trockenphasen-Polymerisationsverfahren. Die erwähnten technologischen Ausgestaltungen - mit anderen worten: die technologischen Varianten der Polymerisation von Olefinen nach Ziegler - sind aus der Literatur und Praxis wohlbekannt, so daß sich nähere Ausführungen zu ihnen erübrigen. Zu bemerken ist allenfalls noch, daß beim erfindungsgemäßen Verfahren die Komponenten des Katalysatorsystems in mannigfacher Weise in den Polymerisationsraum eingebracht werden können, z. B. die Übergangsmetallkomponente (1), die Organoaluminiumkomponente (2) sowie die Organohalogenkomponente (3) alle örtlich gemeinsam, (ii) die gleichen drei Komponenten alle örtlich getrennt voneinander, (iii) die Übergangsmetallkomponente (1) einerseits und ein Gemisch aus (2) und (3) andererseits örtlich getrennt voneinander - was von besonderem Vorteil sein kann - oder (iiii) ein Gemisch aus der

Übergangsmetallkomponente (1) und der Organohalogenkomponente (3) einerseits und die Organoaluminiumkomponente (2) andererseits örtlich getrennt voneinander.

Das neue Verfahren - das vorzugsweise kontinuierlich durchgeführt wirdeignet sich zum Herstellen von Homopolymerisaten des Ethens, vornehmlich aber von Copolymerisaten des Ethens mit untergeordneten Mengen an $C_3$- bis $C_8$-, insbesondere $C_4$- bis $C_6$-α-Monoolefinen; wobei letztere in Form von Einzelindividuen oder in Form von Gemischen aus zwei oder mehr Einzelindividuen vorliegen können. Zur Copolymerisation geeignete α-Monoolefine sind vor allem die unverzweigten, wie Propen, n-Buten-1, n-Penten-1, n-Hexen-1, n-Hepten-1 und n-Octen-1, wobei wiederum mit n-Buten-1 sowie n-Hexen-1 (oder Gemischen aus diesen beiden α-Monoolefinen) die am besten zu bewertenden Polymerisate erhältlich sind, insbesondere solche, die auf 100 Moleinheiten Ethen 0,1 - 10 Moleinheiten des höheren α-Monoolefins bzw. der höheren α-Monoolefine einpolymerisiert enthalten.

Was die Molekulargewichte der Polymerisate betrifft, so kann deren Regelung in einschlägig üblicher Weise erfolgen, insbesondere mittels Wasserstoff als Regulans.

Zu der beim erfindungsgemäßen Verfahren einzusetzenden Übergangsmetall-Katalysatorkomponente (1) ist im einzelnen das Folgende zu sagen: Ihre Herstellung erfolgt in zwei Stufen, die oben sowie nachstehend mit (1.1) und (1.2) bezeichnet sind.

In Stufe (1.1) bringt man einen feinteiligen anorganisch-oxidischen Stoff (I) der oben definierten Art und eine bestimmte, oben definierte Lösung (II) miteinander in Berührung, wobei sich eine Suspension (III) bildet, die bis zur trockenen Konsistenz - Bildung eines festphasigen Zwischenprodukts (IV) - eingedampft wird. In Stufe (1.2) wird letzteres mit einer Lösung einer bestimmten, oben definierten Aluminiumverbindung (V) in Berührung gebracht unter neuerlicher Bildung einer Suspension, - wobei das dabei als Suspendiertes resultierende festphasige Produkt (VI) die neue Katalysatorkomponente (1) ist.

Im einzelnen kann man dabei wie folgt verfahren:

Stufe (1.1)

Der anorganisch-oxidische Stoff (I) wird in Substanz oder in einem Oxakohlenwasserstoff suspendiert (zweckmäßigerweise einem Oxakohlenwasserstoff wie er unter (IIa) definiert ist und mit einem Feststoffgehalt der Suspension von nicht weniger als 5 Gewichtsprozent) mit der Lösung (II) vereinigt und danach die gebildete Suspension (III) eingedampft.

Das Herstellen der Lösung (II) selbst kann so erfolgen, wie man üblicherweise Lösungen herstellt und ist insoweit nicht mit Besonderheiten verbunden.

Als abschließende Maßnahme bei Stufe (1.1) wird die Suspension (III) bis zur trockenen Konsistenz eingedampft, wobei das festphaisge Zwischenprodukt (IV) erhalten wird. Hierbei kann man - unter Einhaltung der oben gegebenen Temperaturbedingungen - so verfahren, wie man üblicherweise Suspensionen schonend eindampft. Dies bedeutet, daß es im allgemeinen zweckmäßig - und bei relativ hohen Oxakohlenwasserstoffen (IIa) u. U. unerläßlich - ist, das Eindampfen unter mehr oder minder stark erniedrigtem Druck vorzunehmen. Als Faustregel gilt, daß man das Paar Temperatur/Druck so wählen sollte, daß der Eindampfvorgang nach etwa 1 bis 10 Stunden beendet ist. Zweckmäßig ist es auch, das Eindampfen unter steter Wahrung der Homogenität des behandelten Gutes vorzunehmen; - wofür sich z. B. Rotationsverdampfer bewährt haben. Eine verbleibende Restmenge an Oxakohlenwasserstoff, etwa eine durch Komplexbildung gebundene Menge, ist für das festphasige Zwischenprodukt (IV) im allgemeinen ohne Schaden.

Stufe (1.2)

Man bereitet zunächst in getrennten Ansätzen eine 0,1- bis 50-, vorzugsweise etwa 25-gewichtsprozentige Suspension des festphasigen Zwischenprodukts (IV) sowie eine 5- bis 80-, vorzugsweise etwa 20-gewichtsprozentige Lösung der Alminiumverbindung (V), wobei als Suspensions- bzw. Lösungsmittel insbesondere Kohlenwasserstoffe, vor allem relativ leichtsiedende Alkan-Kohlenwasserstoffe, wie Hexane, Heptane oder Benzine, in Betracht kommen. Danach vereinigt man die Suspension und die Lösung in solchen Mengenverhältnissen, daß das gewünschte Gewichtsverhältnis erreicht wird. Zur Vereinigung wird man im allgemeinen die Lösung in die Suspension unter Rühren einbringen, denn diese Verfahrensweise ist praktischer als die - ebenfalls mögliche - umgekehrte. Bei Temperaturen von -25 bis 120° C, insbesondere bei Temperaturen von 25 bis 80° C, ist innerhalb einer Zeitspanne von 15 bis 600 Minuten, insbesondere 60 bis 300 Minuten, die Bildung des - als Suspendiertes vorliegenden - festphasigen Produktes (VI) erfolgt.

Dieses kann zweckmäßigerweise unmittelbar in Form der erhaltenen Suspension - gegebenenfalls nach einer Häsche mittels Digerieren oder Filtrieren - als Übergangsmetall-Katalysatorkomponente (1) verwendet werden. Falls gewünscht, ist es aber auch möglich, das festphasige Produkt (VI) zu isolieren und dann erst als Katalysatorkomponente (I) einzusetzen;- wobei sich zum Isolieren z. B. der folgende weg anbietet: Man trennt das Produkt (VI) von der flüssigen Phase mittels Filtration und wäscht es mit reiner Flüssigkeit (etwa der Art, die man auch als Suspensions- bzw. Lösungsmittel verwendet hatte), worauf man es trocknet, etwa im Vakuum.

Has die stoffliche Seite der Übergangsmetall-Katalysatorkomponenten (I) betrifft, ist im einzelnen noch das Folgende zu sagen:

Der in Stufe (1.1) einzusetzende anorganisch-oxidische Stoffe (I) wird im allgemeinen ein

Aluminosilikat oder - insbesondere - ein Siliciumdioxid sein; wichtig ist, daß er die geforderten Eigenschaften besitzt. - Wie sich gezeigt hat, sind die der gegebenen Spezifikation entsprechenden im Handel erhältlichen einschlägig üblichen Trägerstoffe gut geeignet.

Das zu verwendende Lösungsmittel (IIa) ist ein Oxakohlenwasserstoff gesättigt aliphatischer oder teils gesättigt aliphatischer, teils aromatischer Natur, der 1 bis 2 Oxasauerstoffatome sowie mehr als 3 aber weniger als 19 Kohlenstoffatome aufweist, vorzugsweise ein Oxakohlenwasserstoff gesättigt aliphatischer oder teils gesättigt aliphatischer, teils aromatischer Natur, der 1 Oxasauerstoffatom sowie mehr als 3 aber weniger als 11 Kohlenstoffatome aufweist, insbesondere ein ringgeschlossener Oxakohlenwasserstoff gesättigt aliphatischer Natur, der 1 Oxasauerstoffatom sowie 4 bis 6 Kohlenstoffatome aufweist, und vor allem Tetrahydrofuran. Außer dem letztgenannten eignen sich - unter Beachtung der oben wiedergegebenen Rangfolge - als Oxakohlenwasserstoffe weiterhin z. B. Ethylenglykoldimethylether, Anisol, Tetrahydropyran und Dioxan. Die Oxakohlenwasserstoffe können eingesetzt werden in Form von Einzelindividuen sowie Gemischen aus zwei oder mehr Einzelindividuen.

Der einzusetzende Vanadiumtrihalogenid-Alkohol-Komplex (IIb1) hat die Formel $VY_3.nZ\text{-}OH$, worin stehen Y für Chlor oder Brom, vorzugsweise Chlor, n für eine Zahl von 1 bis 6, vorzugsweise 3 bis 4, und Z für einen einwertigen, nicht mehr als 10, vorzugsweise nicht mehr als 8 Kohlenstoffatome aufweisenden Kohlenwasserstoffrest gesättigt-aliphatischer oder teils gesättigt-aliphatischer, teils aromatischer Natur, insbesondere einen nicht mehr als 6 Kohlenstoffatome aufweisenden Alkylrest. Dabei kann das zugrunde liegende Vanadiumtrihalogenid ein bei Ziegler-Katalysatorsystemen übliches sein. Als alkoholische Komponente eignen sich- unter Wahrung der oben wiedergegebenen Rangfolge - z. B. Methanol, Ethanol, Propanol-2, Butanol-2 und 2-Methylbutanol-2. Die Komplexe können- z. B. zweckmäßigerweise in situ, etwa aus Vanadiumtrichlorid und Propanol-2 in Tetrahydrofuran als Lösungsmittel - nach üblichen Methoden hergestellt sein, z. B. nach D.C. Bradley, M. L. Mehta, Can. J. Chem. 40 (1962), 1710/3; auch sie können eingesetzt werden in Form von Einzelindividuen sowie Gemischen aus zwei oder mehr Einzelindividuen.

Das einzusetzende Titantrihalogenid (IIb2) kann wiederum ein bei Ziegler-Katalysatorsystemen übliches sein, z. B. ein bei der Reduktion eines Titantetrahalogenids mittels Wasserstoff, Aluminium oder aluminiumorganischen Verbindungen erhaltenes Reaktionsprodukt. Als besonders gut geeignet haben sich erwiesen z. B. Trichloride der Formel $TiCl_3$, wie sie bei der Reduktion von Titantetrachlorid mittels Wasserstoff anfallen sowie Trichloride der Formel $TiCl_3.\text{-}1/3\ AlCl_3$, wie sie bei der Reduktion von Titantetrachlorid mittels metalischem Aluminium anfallen. Wahlweise kann ein Titantrihalogenid-Alkohol-Komplex der eingangs definierten Art eingesetzt werden; - für ihn gilt im übrigen sinngemäß das gleiche wie für den Vanadiumtrihalogenid-Alkohol-Komplex (IIbl). Die Titantrihalogenide und Titantrichlorid-Alkohol-Komplexe können eingesetzt werden in Form von Einzelindividuen sowie Gemischen aus zwei oder mehr Einzelindividuen.

Das gegebenenfalls mit einzusetzende Zirkontetrahalogenid (IIb3) kann ebenfalls ein bei Ziegler-Katalysatorsystemen übliches sein.

Die in Stufe (1.2) einzusetzende Aluminiummverbindung (V) kann z. B. eine Verbindung sein wie sie repräsentiert wird durch die Formeln $Al(C_2H_5)_3$, $Al(C_2H_5)_2Cl$, $Al(C_2H_5)_2Br$, $Al(C_2H_5)_{1,5}Cl_{1,5}$, $Al(C_2H_5)_{1,5}Br_{1,5}$, $Al(C_2H_5)Cl_2$, $Al(C_2H_5)Br_2$, $Al(C_4H_9)_3$, $Al(C_4H_9)_2Cl$, $Al(C_4H_9)Cl_2$, $Al(C_2H_5)_2H$, $Al(C_4H_9)_2H$, $Al(C_3H_7)_2(OC_3H_7)$ oder $Al(C_2H_5)_{1,5}(OC_2H_5)_{1,5}$ sowie Isoprenylaluminium. Wie sich gezeigt hat, sind besonders gut geeignet Aluminiumverbindungen der Formeln $C_2H_5AlCl_2$, $(C_2H_5)_2AlCl$ sowie Isoprenylaluminium. Die Aluminiumverbindungen (V) können eingesetzt werden in Form von Einzelindividuen sowie Gemischen aus zwei oder mehr Einzelindividuen.

Die Organoaluminium-Katalysatorkomponente (2) betreffend ist zu sagen, daß sich hierfür die einschlägig üblichen Verbindungen eignen; als geeignete Individien sind z. B. zu nennen solche der Formeln $Al(C_2H_5)_3$, $Al(i\text{-}C_4H_9)_3$, $Al(n\text{-}C_4H_9)_3$, $Al(C_8H_{17})_3$ sowie Isoprenylaluminium.

Als Organohalogen-Katalysatorkomponente (3) schließlich kann zweckmäßigerweise eine Verbindung aus den folgenden Verbindungsklassen eingesetzt werden:

(A) Gesättigte aliphatische Halogenkohlenwasserstoffe; wobei geeignete Individuen sind solche der Formeln $CCl_4$, $CHCl_3$, $CH_2Cl_2$, $CBr_4$, $CHBr_3$, $CFCl_3$, $CF_2Cl_2$ und $CF_3Cl$. Davon besonders geeignet sind $CCl_4$, $CHCl_3$, $CH_2Cl_2$ und $CF_2Cl_2$. Herausragend gut geeignet ist $CFCl_3$.

(B) Olefinisch ungesättigte aliphatische Halogenkohlenwasserstoffe; wobei geeignete Individuen sind solche der Formeln $CH_2=CHCl$, $CH_2=CCl_2$, $CHCl=CCl_2$, $Cl_2C=CCl_2$, $CH_2=CH\text{-}CH_2Cl$, $CCl_2=CCl\text{-}CCl_3$, $CH_2=CHBr$ und $CH_2=CH\text{-}CH_2Br$. Davon besonders geeignet sind $CH_2=CHCl$, $CH_2=CCl_2$ und $CH_2=CHBr$. Herausragend gut geeignet sind $CH_2=CH\text{-}CH_2Cl$, $CCl_2=CCl\text{-}CCl_3$ und $CH_2=CH\text{-}CH_2Br$.

(C) Acetylenisch ungesättigte aliphatische Halogenkohlenwasserstoffe; wobei geeignete Individuen sind solche der Formeln $CH\equiv\text{-}CH_2Cl$, $CH\equiv C\text{-}CH_2Br$, $CH_3\text{-}C\equiv C\text{-}CH_2Cl$, $CH_3\text{-}C\equiv C\text{-}CH_2Br$, $C_2H_5\text{-}C\equiv C\text{-}$

$CH_2Cl$ und $C_2H_5$-C≡C-$CH_2Br$. Davon besonders geeignet sind $CH_3$-C≡C-$CH_2Cl$ und $CH_3C$≡C-$CH_2Br$. Herausragend gut geeignet sind CH≡C-$CH_2Cl$ und CH≡C-$CH_2Br$.

(D) Aromatische Halogenkohlenwasserstoffe; wobei geeignete Individuen sind α-Chlortoluol, α,α-Dichlortoluol, α,α,α-Trichlortoluol, Diphenylchlormethan, Diphenyldichlormethan, Triphenylchlormethan, α-Bromtoluol, α,α-Dibromtoluol und α,α,α-Tribromtoluol Davon besonders geeignet ist Bromtoluol. Herausragend gut geeignet sind α-Chlortoluol, α,α-Dichlortoluol und α,α,α-Trichlortoluol.

(E) Gesättigte aliphatische halogenierte Ketone, Carbonsäurechloride und Carbonsäureester; wobei geeignete Individuen sind Hexachloraceton, Monochloracetylchlorid, Dichloracetylchlorid, Trichloracetylchlorid, Monobromacetylbromid, Methylmonochloracetat, Methyldichloracetat und Methyltrichloracetat. Hiervon sind zu bevorzugen Dichloracetylchlorid, Trichloracetylchlorid, Methyltrichloracetat und insbesondere Hexachloraceton, Monochloractylchlorid sowie Methylmonochloracetat.

(F) Olefinisch ungesättigte aliphatische halogenierte Ketone, Carbonsäurechloride und Carbonsäureester; wobei geeignete Individuen sind Chlormethylvinylketon, Trichlormethylvinylketon, 1-Chloracrylsäurechlorid, 2,3,4-Tetrachlorbuten-2-säuremethylester, 2,3,4,4-Tetrachlorbuten-2-säureethylester, 2,3,4,4-Tetrachlorbuten-2-säure-n-butyl-ester, Methylperchlorcrotonat und Ethylperchlorcrotonat. Davon sind hervorzuheben Chlormethylvinylketon. Trichlormethylvinylketon, Methylperchlorcrotonat und 2,3,4,4,-Tetrachlorbuten-2-säure-n-butylester.

(G) Aromatische halogenierte Carbonsäurechloride und Carbonsäureester; wobei geeignete Individuen sind α-Chlorphenylacetylchlorid, Methyl-α-Chlorphenylacetat, Ethyl-α-chlorphenylacetat, Methyl- α,α-dichlorphenylacetat und Ethyl-α,α-dichlorphenylacetat. Davon sind hervorzuheben α-Chlorphenylacetylchlorid, Methyl-α-Chlorphenylacetat und Methyl-α,α-dichlorphenylacetat.

Wie sich gezeigt hat, sind von den genannten Verbindungsklassen für den erfindungsgemäßen Zweck am besten geeignet Verbindungen der Klassen (A), (B), (C) sowie (D), gefolgt von (E) und schließlich (F) sowie (G). Die betroffenen Verbindungen können eingesetzt werden in Form von Einzelindividuen sowie Gemischen aus zwei oder mehr Einzelindividuen.

**Beispiel**

Herstellung der Übergangsmetall-Katalysatorkomponente (1):

Stufe (1.1)

Es wurde ausgegangen von (1.1.1) 25,3 Gewichtsteilen Siliciumdioxid ($SiO_2$, Teilchendurchmesser 90 bis 150 µm, Porenvolumen: 1,7 $cm^3/g$, Oberfläche; 320 $m^2/g$) sowie (1.1.2) einer Lösung aus 100 Gewichtsteilen Tetrahydrofuran und 24 Gewichtsteilen einer Übergangasmetall-Komposition, bestehend aus 100 Molteilen eines Vanadiumtrihalogenid-Alkohol-Komplexes der Formel $VCl_3.4ZOH$, worin Z steht für einen iso-Propylrest, 1,2 Molteilen eines Titantrihalogenids der Formel $TiCl_3.1/3\ AlCl_3$ sowie 5,9 Molteilen Zirkontetrachlorid. Diese zwei Komponenten wurden vereinigt und die dabei erhaltene Suspension kurz gerührt. Anschließend wurde das gebildete festphasige Zwischenprodukt (IV) isoliert durch Abtreiben der flüchtigen Bestandteile in einem Rotationsverdampfer der bis zu einem Betriebsdruck von 10 mbar und einer Betriebstemperatur von 70° C gebracht wurde.

Stufe (1.2)

20 Gewichtsteile des in Stufe (1.1) gewonnenen festphasigen Zwischenprodukts (IV) wurden in 103 Gewichtsteilen n-Heptan suspendiert, worauf diese Suspension mit einer Lösung aus 8 Gewichtsteilen Diethylaluminiumchlorid in 17 Gewichtsteilen n-Heptan versetzt und die daraus resultierende Suspension kurz bei 65° C gerührt wurde. Anschließend wurde filtriert, drei mal mit n-Heptan gewaschen und im Vakuum getrocknet. Die Analyse des erhaltenen festphasigen Produktes (VI) - d.h. der Katalysatorkomponente (1) - ergab einen Gehalt an Übergangsmetallen von 0,00145 Mol/g.

Polymerisation:

Die Polymerisation wurde kontinuierlich durchgeführt in einem zylindrischen Polymerisationsreaktor der ein Volumen von 1.500 l und ein Verhältnis von Höhe : Durchmesser von 2,1 : 1,0 hatte, einen Wendelrührer aufwies und während der Polymerisation im kontinuierlichstationären Zustand zu 5/7 seiner Höhe mit kleinteiligem Polymerisat als Polymerisationsmedium gefüllt war.

Im einzelnen war das Polymerisationsverfahren so ausgestaltet (s. dazu die GB-PS-1 552 438), daß das Polymerisationsmedium ein zentrisches Rührbett aus kleinteiligem Polymerisat war, mit den Maßgaben, daß

(i) das Polymerisationsmedium im peripheren Bereich des Rührbetts nach oben und im zentralen Bereich des Rührbetts nach unten bewegt wurde, derart, daß im Rührbett eine Froudezahl von 2,67 gegeben war, und

(ii) im Polymerisationsmedium die Abfuhr der Polymerisationswärme im wesentlichen durch Entspannungskühlung erfolgte, derart, daß man

($ii_1$) das zu polymerisierende Gemisch der Monomeren außerhalb des Reaktionsraumes auf eine Temperatur, die 70° C unter der Temperatur im Reaktionsmedium lag, sowie einen Druck, der 65 bar über dem Druck im Reaktionsmedium lag, brachte,

($ii_2$) dieses Gemisch in überschüssiger Menge in das Rührbett entspannte,

($ii_3$) den nicht durch Polymerisation verbrauchten Rest (= etwa 90 %) des Gemisches der Monomeren aus dem Reaktionsraum abzog, und

($ii_4$) diesen Rest nach Ersetzen der durch Polymerisation verbrauchten Anteile der Monomeren sowie nach Wiederherstellen der für ($ii_1$) gewählten Bedingungen der Temperatur und des Druckes in Kreislauf erneut in das Rührbett entspannte.

Unter diesen Bedingungen wurde bei einem konstant gehaltenen Druck im Reaktor von 40 bar ein Gemisch ($ii_2$) aus 97,5 Vol.-% Ethylen, 1,5 Vol.-% Buten-(I) sowie 1,0 Vol.-% Wasserstoff (als Molekulargewichtsregler) bei einer Temperatur von 100° C in Abwesenheit flüssiger Verdünnungsmittel polymerisiert.

Dabei wurde ein Ziegler-Katalysatorsystem eingesetzt aus:

(1) 6 g/h der oben beschriebenen Übergangsmetall-Katalysatorkomponente,

(2) 3 g/h Triisobutylaluminium als Organoaluminium-Katalysatorkomponente sowie

(3) 0,45 g/h 3-Chlorpropin-1 als Organohalogen-Katalysatorkomponente ;

- womit das Atomverhältnis (Summe der) Übergangsmetalle aus Komponente (1) : Aluminium aus Komponente (2) 1 : 1,74 und das Molverhältnis Komponente (2) : Komponente (3) 1 : 0,4 betrug.

Auf diese Weise wurden 160 kg/h eines Ethen-Buten-1-Copolymerisats erhalten, das auf 100 Moleinheiten Ethen 0,7 Moleinheiten Buten-1 einpolymerisiert enthielt.

Das Copolymerisat hatte eine ausgeprägt gute Spannungsrißbeständigkeit, eine Hohe Molmasse bei zugleich problemloser Verarbeitbarkeit sowie eine ausgezeichnete Steifigkeit.

Die genannten - und andere - Eigenschaften des Copolymerisats schwankten während eines mehrtätigen Betriebs der Polymerisation nur geringfügig um den jeweiligen Mittelwert.

**Patentanspruch**

Verfahren zum Herstellen von Homopolymerisaten des Ethens sowie Copolymerisaten des Ethens mit untergeordneten Mengen an $C_3$- bis $C_8$-α-Monoolefinen durch Polymerisation des bzw. der Monomeren bei Temperaturen von 30 bis 200° C und Drücken von 0,1 bis 200 bar mittels eines Ziegler-Katalysatorsystems aus

(1) einer Übergangsmetall-Katalysatorkomponente und

(2) einer Organoaluminium-Katalysatorkomponente der Formel $AlR_mX_{3-m}$, worin stehen

x für einen Rest OR, Chlor, Brom bzw. Wasserstoff,

R für einen $C_1$- bis $C_{18}$-Kohlenwasserstoffrest, und

m für eine Zahl von 1 bis 3,

und

(3) einer Organohalogen-Katalysatorkomponente,

mit den Maßgaben, daß das Atomverhältnis Übergangsmetall, aus der Katalysatorkomponente (1) : Aluminium aus der Katalysatorkomponente (2) im Bereich von 1 : 0,1 bis 1 : 500 und das Molvernälthnis Organoalumnium-Katalysatorkomponente (2) Organohalogen-Katalysatorkomponente (3) im Bereich von 1: 0,001 bis 1 : 10 liegt,

dadurch gekennzeichnet, daß eingesetzt wird als Übergangsmetall-Katalysatorkomponente (1) das festphasige Produkt (VI), das erhalten worden ist, indem man

(1.1) zunächst

(1.1.1) einen feinteiligen, porösen, anorganisch-oxidischen Stoff (I), der einen Teilchendurchmesser von 1 bis 1.000 µm, ein Porenvolumen von 0,3 bis 3 $cm^3/g$ sowie eine Oberfläche von 100 bis 1.000 $m^2/g$ besitzt und die Formel $SiO_2.aAl_2O_3$ - worin a steht für eine Zahl im Bereich von 0 bis 2 - hat, und

(1.1.2) eine Lösung (II), wie sie sich ergibt beim Zusammenbringen von

(IIa) 100 Gewichtsteilen eines Oxakohlenwasserstoffs gesättigt

aliphatischer oder teils gesättigt aliphatischer, teils aromatischer Natur, der 1 bis 2 Oxasauerstoffatome sowie mehr als 3 aber weniger als 19 Kohlenstoffatome aufweist, und

(IIb) 0,01 bis 50 Gewichtsteilen eines Gemischs aus

(IIb1) 100 Molteilen eines Vanadiumtrihalogenid-Alkohol-Komplexes der Formel $VY_3.nZ\text{-}OH$, worin stehen Y für Chlor oder Brom, n für eine Zahl von 1 bis 6 und Z für einen einwertigen, nicht mehr als 10 Kohlenstoffatome aufweisenden Kohlenwasserstoffrest gesättigt-aliphatischer oder teils gesättigt-aliphatischer, teils aromatischer Natur,

(IIb2) 0,2 bis 300 Molteilen eines Titantrihalogenids, wobei das Halogen Chlor und/oder Brom sein kann oder eines Titantrihalogenid-Komplexes der Formel $TiY_3.nZ\text{-}OH$, worin stehen Y für Chlor oder Brom, n für eine Zahl von 1 bis 6 und Z für einen einwertigen, nicht mehr als 10 Kohlenstoffatome aufweisenden Kohlenwasserstoffrest gesättigt-aliphatischer oder teils gesättigt-aliphatischer, teils aromatischer Natur, sowie

(IIb3) - gegebenenfalls - 1 bis 400 Molteilen eines Zirkontetrahalogenids, wobei das Halogen Chlor und/oder Brom sein kann,

miteinander in Berührung bringt unter Bildung einer Suspension (III), mit der Maßgabe, daß das Gewichtsverhältnis anorganisch-oxidischer Stoff (I) : Übergangsmetall-Komposition (IIb) im Bereich von 1 : 0,01 bis 1 : 2 liegt, die Suspension (III) bei einer Temperatur, die unterhalb von 200° C und oberhalb des Schmelzpunkts des verwendeten Oxakohlenwasserstoffs (IIa) liegt, bis zur trockenen Konsistenz - Bildung eines festphasigen Zwischenprodukts (IV) - eindampft, und

(1.2) dann

(1.2.1) das aus Stufe (1.1) erhaltene festphasige Zwischenprodukt (IV) und

(1.2.2) eine in einem organischen Lösungsmittel gelöste Aluminiumverbindung (V) der Formel $AlR_mX_{3-m}$, worin stehen

x für einen Rest OR, Chlor, Brom bzw. Wasserstoff,

R für einen $C_1$- bis $C_{18}$-Kohlenwasserstoffrest, und

m für eine Zahl von 1 bis 3,

miteinander in Berührung bringt unter Bildung einer Suspension, mit der Maßgabe, daß das Gewichtsverhältnis festphasiges Zwischenprodukt (IV) : Aluminiumverbindung (V) im Bereich von 1 : 0,05 bis 1 : 2 liegt - wobei das als Suspendiertes resultierende festphasige produkt (VI) die Übergangsmetall-Katalysatorkomponente (1) ist -.

**Claim**

A process for the preparation of homopolymers of ethene and copolymers of ethene with minor amounts of $C_3$-$C_8$-$\alpha$-monoolefins, by polymerization of the monomer or monomers at from 30 to 200° C, and under a pressure of from 0.1 to 200 bar, using a Ziegler catalyst system comprising

(1) a transition metal catalyst component.

(2) an organoaluminum catalyst component of the formula

$$AlR_mX_{3-m}$$

where

x is a radical OR, chlorine. bromine or hydrogen.

R is a $C_1$-$C_{18}$-hydrocarbon radical, and

m is a number from 1 to 3 and

(3) an organohalogen catalyst component.

with the provisos that the atomic ratio of the transition metal from the catalyst component (1) to aluminum from the catalyst component (2) is from 1 : 0,1 to 1 : 500, and the molar ratio of the organoaluminum catalyst component (2) to the organohalogen catalyst component (3) is from 1 : 0,001 to 1 : 10.

wherein the transition metal catalyst component (1) used is a solid-phase product (IV) which has been obtained by

(1.1) first bringing into contact with one another

(1.1.1) a finely divided, porous, inorganic oxidic substance (I) which has a particle diameter of from 1 to 1.000 µm, a pore volume of from 0.3 to 3 $cm^3/g$ and a specific surface area of from 100 to 1,000 $m^2/g$ and is of the formula $SiO_2 \cdot aAl_2O_3$, where a is a number from 0 to 2, and

(1.1.2) a solution (II) obtained by combining

(IIa) 100 parts by weight of a saturated aliphatic, or partially saturated aliphatic and partially aromatic, oxahydrocarbon of 1 or 2 oxaoxygen atoms and 4 to 18 carbon atoms, and

(IIb) from 0.01 to 50 parts by weight of a mixture of

(IIb1) 100 molar parts of a vanadium

trihalide/alcohol complex of the formula $VY_3 \cdot nz\text{-}OH$, where Y is chlorine or bromine, n is a number from 1 to 6, and Z is a monovalent saturated aliphatic, or partially saturated aliphatic and partially aromatic, hydrocarbon radical of not more than 10 carbon atoms

(IIb2) from 0.2 to 300 molar parts of a titanium trihalide in which the halogen can be chlorine and/or bromine, or of a titanium trihalide alcohol complex of the formula $TiY_3 \cdot nz\text{-}OH$, where Y is chlorine or bromine, n is a number from 1 to 6, and Z is a monovalent saturated aliphatic, or partially saturated aliphatic and partially aromatic, hydrocarbon radical of not more than 10 carbon atoms, and

(IIb3) if desired, from 1 to 400 molar parts of a zirconium tetrahalide in which the halogen can be chlorine and/or bromine,

to form a suspension (III), with the proviso that the weight ratio of inorganic oxidic substance (I) to transition metal composition (IIb) is from 1 : 0.01 to 1 : 2, the suspension (III) is evaporated to dryness at below 200° C and above the melting point of the oxahydrocarbon (IIa) used, a solid-phase intermediate (IV) being formed, and

(1.2) then bringing into contact with one another

(1.2.1) the solid-phase intermediate (IV) obtained from stage (1.1), and

(1.2.2) a solution, in an organic solvent, of an aluminum compound (V) of the formula

$$AlR_mX_{3\text{-}m}$$

where

x is a radical OR, chlorine, bromine or hydrogen,
R is a $C_1$-$C_{18}$-hydrocarbon radical, and
m is a number from 1 to 3,

to form a suspension, with the proviso that the weight ratio of the solid-phase intermediate (IV) to the aluminum compound (V) is from 1 : 0.05 to 1 : 2, the resulting suspended solid-phase product (VI) being the transition metal catalyst component (1).

**Revendication**

Procédé de préparation d'homopolymères d'éthylène ainsi que de copolymères d'éthylène, avec des quantités accessoires en $\alpha$-monooléfines en $C_3$ à $C_8$, par polymèrisation du ou des monomères à des températures de 30 à 200° C et sous des pressions de 0,1 à 200 bars, à l'aide d'un système de catalyseur Ziegler, constitué de (1) un composant de catalyseur contenant un métal de transition

(2) un composant de catalyseur organoaluminique de formula $AlR_mX_{3\text{-}m}$,

dans laquelle
X représente un group OR, un atome de chlore, de brome ou d'hydrogène,
m représente un nombre de 1 à 3,
et

(3) un composant de catalyseur organohalogéné, et avec cette condition que le rapport aromique du métal de transition du composant de catalyseur (1) l'aluminium du composant de catalyseur (2) soit dans la gamme de 1 : 0,1 à 1 : 500 et que le rapport molaire du composant de catalyseur organoaluminique (2) au composant de catalyseur organohalogéné (3) soit dans la gamme de 1 : 0,001 à 1 : 10,

caractérisé en ce que l'on met en oeuvre comme composant de catalyseur contenant un métal de transition (1), le produit en phase solide (VI) qui a été obtenu, et que

(1.1) d'abord on met en contact.

(1.1.1) une matière minérale oxydée (I) finement divisée, poreuse, qui présente un diamètre des particules de 1 à 1000 µm, un volume des pores de 0,3 à 3 $cm^3/g$ ainsi qu'une surface spécifique de 100 à 1000 $m^2/g$ et répond à la formule $SiO_2\ Al_2O_3$ - dans laquelle a représente un nombre de 0 à 2, et

(1.1.2) une solution (II) obtenue en réunissant

(IIa) 100 parties en poids d'un oxahydrocarbure du type aliphatique saturé ou en parti aliphatique saturé, en partie aromatique, qui comprend 1 à 2 atomes d'oxygène oxa ainsi que plus de 3 mais moins de 19 atomes de carbone, et

(IIb) 0,01 à 50 parties en poids d'un mélange constitué de

(IIb1) 100 parties molaires d'un complexe trihalogénure de vanadium-alcool de formule $VY_3nZ\text{-}OH$, dans laquelle
Y représente le chlore ou le brome,
n représente un nombre de 1 à 6, et
Z représente un group hydrocarbure monovalent, ne comprenant pas de 10 atomes de carbone, du type aliphatique saturé ou en partie aliphatique saturé, en partie aromatique.

(IIb2) 0,2 à 300 parties molaires d'un trihalogènure de titane, l'halogène pouvant être le chlore et/ou le brome, ou d'un complexe de trihalogènure de titane, de formule $TiY_3nZ\text{-}OH$, dans laquelle
Y représente le chlore ou le brome, n représente un nombre de 1 à 6, et
Z représente un groupe hydrocarbure monovalent, ne comprenant pas plus de 10 atomes de carbone, du type aliphatique saturé ou en partie aliphatique saturé, en partie aromatique, ainsi que

(IIb3) - éventuellement - 1 à 400 parties molaires d'un tétrahalogènure de zirconium, l'halogène pouvant être le chlore et/ou le brome,

en formant une suspension (III), avec cette condition que le rapport en poids de la matière minérale oxydée (I) à la composition de métal de

transition (Ib) soit dans la gamme de 1 : 0,01 à 1 : 2, on concentre par évaporation la suspension (III) à une température qui est située en-dessous de 200° C et au-dessus du point de fusion de l'oxahydrocarbure (IIa) utilisé, jusqu'à une consistance sèche-formation d'un produit intermédiare en phase solide (IV)-, et

(1.2) ensuite on met en contact

(1.2.1) le produit intermédiaire en phase solide (IV) obtenu en (1.1) et

(1.2.2) un composé d'aluminium (V) dissous un solvant organique, de formule $AlR_mX_{3-m}$, dans laquelle

X représente un groupe OR, un atome de chlore, de brome ou d'hydrogène,

R représente un groupe hydrocarbure en $C_1$ à $C_{18}$, et

m représente un nombre de 1 à 3.

en formant une suspension, avec cette condition que le rapport en poids du produit intermédiare (IV) en phase solide au composé d'aluminium (V) soit dans la gamme de 1 : 0,05 à 1 : 2 - le produit (VI) en phase solide obtenu en suspension étant le composant de catalyseur contenant un métal de transition (1).